# EUROPÄISCHE PATENTANMELDUNG

(11) **EP 1 319 632 A1**
(43) Veröffentlichungstag der Anmeldung: **18.06.2003**
(21) Anmeldenummer: 02090176.5
(22) Anmeldetag: 22.05.2002
(51) Int. Cl.: C02F 11/12

(54) **Verfahren und Vorrichtung zur Trocknung von Schlamm, insbesondere von Abwasserschlamm**

(30) Priorität: 20.12.2001 PL 35129501; 13.12.2001 PL 11281801
(71) Anmelder: Klimapol Sp.Z O.O.J.V., PL-21-002 Jastkow (PL)
(72) Erfinder: Cygielski, Marek, 20-807 Lublin (PL); Zurawski, Wlodzimierz, 20-601 Lublin (PL)
(74) Vertreter: Patentanwälte Wenzel & Kalkoff

(57) **Zusammenfassung**

Die Erfindung befaßt sich mit einem Verfahren zu Trocknung von Schlamm sowie einer Vorrichtung zur Durchführung desselben.

Bei bekannten Verfahren wird der Schlamm üblicherweise in einem Fluidisationstrockner getrocknet, wobei erwärmte Luft eingeführt und kontaminierte Abluft abgeführt wird. Neben einer hohen Belastung für die Umwelt durch kontaminierte Abluft ist jedoch insbesondere der hohe Energieverbrauch von Nachteil. Dieser steigt noch an, wenn für die Nachtrocknung zusätzliche Energie eingesetzt werden muß.

Durch das erfindungsgemäße Verfahren, nämlich die Trockenluft in einem geschlossenen Kreislauf zu zirkulieren, wird einerseits der Energieverbrauch gesenkt. Andererseits führt das "Recycling" der Trockenluft zu einer Abluft, deren Verschmutzung deutlich reduziert ist. Auch der getrocknete Schlamm weist eine große Homogenität sowie einen hohen Hygienisierungsgrad auf. Des weiteren ist der Aufbau der erfindungsgemäßen Vorrichtung deutlich vereinfacht, was insbesondere die Wartung aber auch die Inbetriebnahme und Stillegung erleichtert.

## Beschreibung

Die Erfindung befaßt sich mit einem Verfahren zur Trocknung von Schlamm, insbesondere von Abwasserschlamm, umfassend die Schritte mechanische Entwässerung des Schlamms bis zu einem Feuchtigkeitsgehalt von etwa 65-90 %, Zuführen des Schlamms in einen Fluidisationstrockner, Formen des Schlamms, Trocknen mindestens der Oberfläche des geformten Schlamms im freien Fall in einem Gegenluftstrom aus Trockenluft, weiteres Trocknen des Schlamms in einem Trockenraum des Fluidisationstrockners mittels Trockenluft und Abführen des bis zu einem Feuchtigkeitsgehalt von etwa 15 bis 30 % getrockneten Schlamms einerseits und der Trockenluft andererseits aus dem Trokkenraum. Des weiteren befaßt sich die Erfindung mit einer Vorrichtung zum Trocknen von Schlamm, insbesondere Abwasserschlamm, im wesentlichen bestehend aus einem Fluidisationstrockner umfassend einen Trockenraum mit einer Eintrittsöffnung und einer Austrittsöffnung für den Schlamm, eine Eintrittsöffnung und eine Austrittsöffnung für Trockenluft, einen horizontal verlaufenden Siebboden, der den Trockenraum in eine Trockenkammer und eine Zuluftkammer teilt, sowie einen Schlammaufgeber mit einem Siebboden und eine Eintrittsöffnung für Trockenluft.

Die bekannten Verfahren bzw. Vorrichtungen werden bei der Trocknung von Schlämmen, insbesondere Abwasserschlämmen, Klärschlämmen und dergleichen eingesetzt. Derartige Schlämme sind üblicherweise sehr feucht und müssen zum Beispiel zur Weiterverarbeitung oder Deponierung getrocknet werden. Bisher wird die aus dem Fluidisationstrockner austretende Trockenluft, die durch Staub und andere Verunreinigungen kontaminiert ist und einen hohen Feuchtigkeitsgrad, bis hin zur Sättigung, aufweist, in einem komplexen und separaten Entstaubungs- und Entfeuchtungsverfahren nachbehandelt. Der aus dem Fluidisationstrockner austretende behandelte Schlamm, der immer noch eine Restfeuchtigkeit aufweist, wird durch weitere Energiezufuhr in einem separaten Verfahren ebenfalls nachbehandelt, um einen weiter erhöhten Trocknungszustand zu erzielen.

Die bekannten Verfahren bzw. Vorrichtungen zum Trocknen von Schlamm weisen jedoch insbesondere den Nachteil auf, daß der aus dem Fluidisationstrockner austretende Schlamm noch einen relativ hohen Feuchtigkeitsanteil von bis zu 30% aufweist. Das Nachtrocknen des Schlamms erfordert jedoch einen sehr hohen Energiebedarf, da die für die Nachtrocknung erforderliche Trockenluft erst durch Erwärmung von Frischluft vorbereitet werden muß. Des weiteren fallen bei der Nachbehandlung der kontaminierten Abluft aus dem Fluidisationstrockner große Mengen von belasteten Abwässern an, die speziell entsorgt werden müssen, wodurch die Betriebskosten weiter steigen. Ein weiterer Nachteil besteht darin, daß die bekannten Vorrichtungen sehr komplex sind und einen hohen Platzbedarf erfordern. Auch ist die Inbetriebnahme und Stillegung einerseits und die Wartung bekannter Vorrichtung anderseits aufwendig.

Es ist daher Aufgabe der vorliegenden Erfmdung, ein Verfahren vorzuschlagen, das energiesparend arbeitet, bei gleichzeitig verbesserten Emissionswerten. Eine weitere Aufgabe der Erfindung besteht darin, eine Vorrichtung zu schaffen, mit der sowohl Betriebskosten als auch die Emissionen für die Umwelt reduziert werden können und die gleichzeitig eine kompakte und einfache Konstruktion aufweist.

Die der Erfindung zugrunde liegende Aufgabe wird zum einen mit einem Verfahren der eingangs genannten Art geschaffen, das dadurch gekennzeichnet ist, daß die Trockenluft in einem geschlossenen Kreislauf zirkuliert. Dadurch werden zum einen die Emissionen an für die Umwelt schädlichen Schadstoffen reduziert. Zum anderen wird auch der Energieverbrauch deutlich reduziert, da die bereits erwärmte Trockenluft erneut nutzbar gemacht wird. Mit dem erfindungsgemäßen Verfahren wird Schlamm mit einem niedrigen Feuchtigkeitsgehalt hergestellt, bei dem u.a. osmotisch gebundene Feuchtigkeit, die sich innerhalb der Zellen pflanzlichen und tierischen Gewebes bzw. innerhalb der Struktur kolloidaler Körper befindet, beseitigt. In diesen Körpern bilden Moleküle mit einer großen Molekülmasse halbdurchlässige Trennbereiche, zwischen denen sich die Feuchtigkeit meistens im Zustand einer Lösung von Verbindungen mit einer geringen Molekülmasse befindet. Auch die Beseitigung des Wassers, das durch chemische und koordinative Bindungen gebunden ist, wird erreicht.

In einer bevorzugten Weiterbildung des erfindungsgemäßen Verfahrens wird der aus einer Trockenkammer des Trockenraums abgeführte Schlamm einer Nachtrocknungsvorrichtung zugeführt und darin durch Beaufschlagen mit Trockenluft aus dem geschlossenen Kreislauf bis zu einem Feuchtigkeitsgehalt von etwa 1 bis 15% getrocknet. Dies führt zum einen dazu, daß das Endprodukt durch einen hohen Trockengrad und eine hohe Homogenität gekennzeichnet ist. Des weiteren führt die Nachtrocknung des Schlamms zu einem hohen Hygienisierungsgrad des Endproduktes, was die Weiterverarbeitung vereinfacht und eine landwirtschaftliche Nutzung ermöglicht. Der Vorteil des Nachtrocknens besteht auch darin, daß sich während der Nachtrocknung die Feuchtigkeit mit Hilfe der Molekulardiffusion oder der Kapillarkräfte nach außen schiebt.

Ein weiterer Vorteil wird dadurch erreicht, daß die Aufenthaltszeit des Schlamms in dem Trockenraum und/oder der Nachtrocknungsvorrichtung reguliert wird. Durch diese Regulierungsmöglichkeit ist ein individueller Einsatz in Abhängigkeit des gewünschten Endproduktes gewährleistet, wobei sichergestellt ist, daß der Schlamm nur solange der Trocknung ausgesetzt ist, wie es unbedingt notwendig ist. Dadurch können die Betriebskosten weiter gesenkt werden.

Des weiteren wird die Aufgabe der Erfindung durch eine Vorrichtung mit den eingangs genannten Merkmalen dadurch gelöst, daß die Vorrichtung als geschlossenes System ausgebildet ist, derart, daß die aus der Trockenkammer abgeführte Trockenluft dem Trockenraum wieder zugeführt wird. Die aus der Trockenkammer abgeführte Trockenluft wird quasi recycelt und innerhalb des Systems belassen, so daß ein höherer Wirkungsgrad der Anlage insgesamt erzielt wird. Dadurch sinken die Energiekosten und die Betriebsausgaben insgesamt. Auch werden die Emissionen an die Umwelt reduziert.

Eine besonders bevorzugte Ausführungsform der Erfindung weist zusätzlich zum Fluidisationstrockner eine Vorrichtung zum Nachtrocknen auf, die dem Fluidisationstrockner nachgeordnet ist. Dadurch wird eine noch bessere Trocknung des Schlamms erreicht. Besonders vorteilhaft ist es, daß die Vorrichtung zum Nachtrocknen innerhalb der Zuluftkammer ausgebildet ist. Dadurch ist eine besonders kompakte und einfache Konstruktion ermöglicht, was auch eine schnelle und einfache In- und Außerbetriebnahme sowie Wartung nach sich zieht.

Vorteilhafterweise ist innerhalb der Trockenkammer mindestens ein Rührwerk angeordnet, wodurch ein schneller Energieaustausch und der Wasseraustritt aus dem Schlamm begünstigt wird.

In einer weiteren vorteilhaften Ausführungsform der Erfindung ist der Schlammaufgeber als Dosiereinheit ausgebildet und aus einem Gehäuse mit einer Pumpe, einem Formsieb als Siebboden und einem Drehmesser, das an das Formsieb drückbar ist, gebildet. Mittels des Formsiebs wird der zugeführte Schlamm zu fadenartigen Elementen umgeformt und mittels der Drehmesser durch das Formsieb gepreßt. Durch das Andrücken des Drehmessers an das Formsieb einerseits und die Rotation des Drehmessers andererseits wird sichergestellt, daß der Schlamm vollständig und sicher durch das Formsieb gepreßt wird. Man spricht daher auch von einer Reinigungseinheit. Durch die verwendete Lösung werden Verstopfungen durch faserige und feste Stoffe vermieden, was gleichzeitig zu einer niedrigeren Ausfallwahrscheinlichkeit führt.

Weitere Vorteile und Ausführungsformen der Erfindung ergeben sich aus den Unteransprüchen sowie den Zeichnungen. Besonders bevorzugte Verfahrensschritte sowie Ausführungsformen der erfindungsgemäßen Vorrichtungen werden anhand der Zeichnung näher erläutert. In der Zeichnung zeigen:
- Fig. 1: einen Fluidisationstrockner im Längsschnitt gemäß einer ersten Ausführungsform der vorliegenden Erfindung,

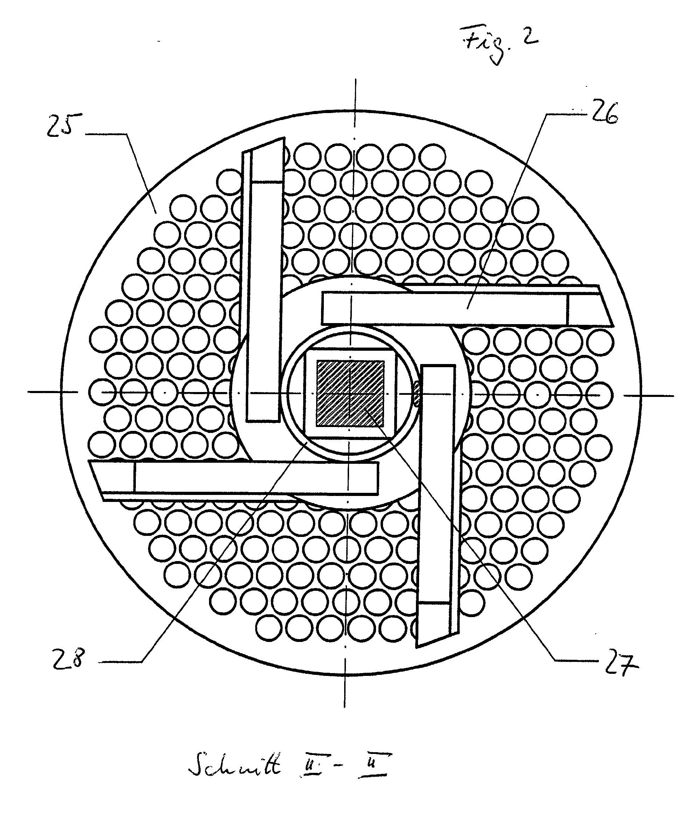

- Fig. 2: eine Ansicht gemäß Schnitt II-II aus der Fig. 1,
- Fig.3: einen Fluidisationstrockner im Längsschnitt gemäß einer zweiten Ausführungsform der vorliegenden Erfindung,
- Fig. 4: eine schematische Darstellung einer Vorrichtung zum Trocknen von Schlamm mit einem Fluidisationstrockner gemäß Fig.1, und
- Fig. 5: eine schematische Darstellung einer Vorrichtung zum Trocknen von Schlamm mit einem Fluidisationstrockner gemäß Fig. 3.

Im folgenden werden verschiedene Ausführungsformen von Vorrichtungen zum Trocknen von Schlamm, insbesondere von Abwasserschlämmen, beschrieben. Des weiteren werden Verfahren zum Schlammtrocknen beschrieben.

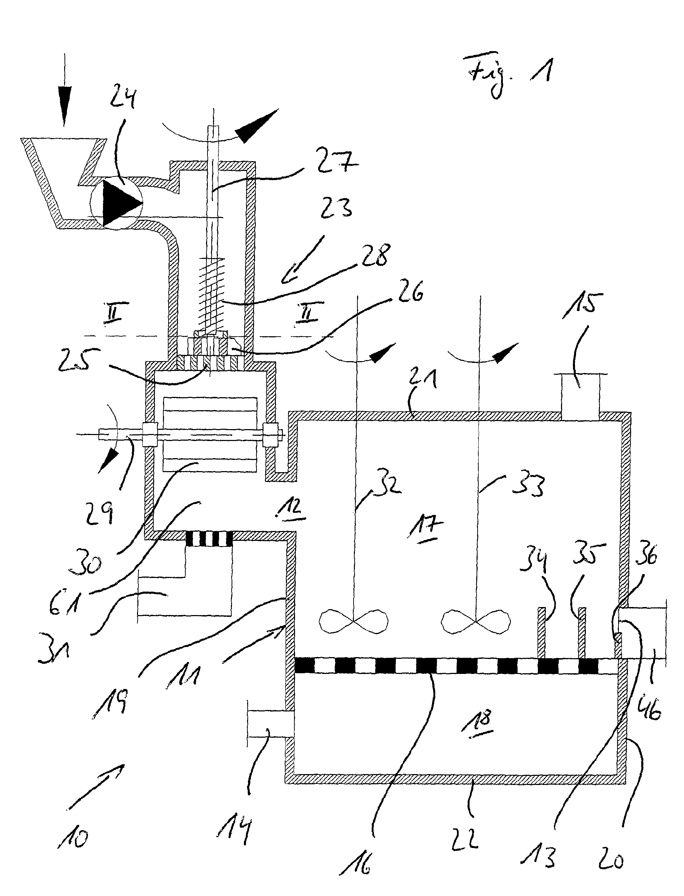

In Fig. 1 ist ein Fluidisationstrockner 10 als wesentlicher Teil einer Vorrichtung zum Trocknen von Schlamm gezeigt. Der Fluidisationstrockner 10 umfaßt einen Trockenraum 11. Der Trockenraum 11 weist eine Eintrittsöffnung 12 sowie eine Austrittsöffnung 13 für den zu trocknenden Schlamm auf. Des weiteren verfügt der Trockenraum über eine Eintrittsöffnung 14 und eine Austrittsöffnung 15 für die Trockenluft. Der Trockenraum 11 selbst ist durch ein Sieb, nämlich das sogenannte Fluidisationssieb 16, in eine Trockenkammer 17 und Zuluftkammer 18 unterteilt. Das Fluidisationssieb 16 verläuft im wesentlichen horizontal, nämlich senkrecht zu Seitenwänden 19, 20 des Trockenraumes. Nach oben bzw. nach unten ist die Trockenkammer durch eine Deckenwand 21 sowie eine Bodenwand 22 abgeschlossen. Die Eintrittsöffnung 12 für den zu trocknenden Schlamm sowie die Austrittsöffnungen 13, 15 für den Schlamm bzw. die Trockenluft führen in die Trockenkammer 17 bzw. aus dieser heraus. Die Eintrittsöffnung 14 für die Trockenluft führt in die Zuluftkammer 18.

Im Bereich der Eintrittsöffnung 12 für den Schlamm ist der sogenannte Schlammaufgeber angeordnet, der im gezeigten Ausführungsbeispiel als Dosiereinheit 23 ausgebildet ist. Die Dosiereinheit 23 besteht im wesentlichen aus einer Pumpe 24, die beispielsweise als Schneckenpumpe ausgebildet sein kann, einem Formsieb 25, das als Siebboden dient, sowie einem Drehmesser 26. Das Drehmesser 26 liegt lose auf einer Antriebswelle 27 und ist mittels einer Feder 28 oder dergleichen gegen das Formsieb 25 drückbar. Anstelle des Drehmessers 26 können alternativ auch andere Mittel, wie zum Beispiel Paddel, Formbleche oder dergleichen verwendet werden. Der durch die Feder 28 aufgebrachte Druck auf das Drehmesser 26 kann auch durch andere übliche Mittel, wie zum Beispiel Hydraulik- oder Pneumatikzylinder, aufgebracht werden.

Unterhalb des Formsiebs 25, also in Flußrichtung des Schlammes hinter dem Formsieb 25 und vor der Eintrittsöffnung 12 für den Schlamm in die Trockenkammer 17 ist eine Welle 29 mit montierten Messern 30 gelagert. Das drehbar antreibbare Messer 30 ist oberhalb einer Eintrittsöffnung 31 für Trockenluft angeordnet. Innerhalb der Trockenkammer 17 sind im gezeigten Ausführungsbeispiel zwei Rührwerke 32, 33 angeordnet, die in Transportrichtung des Schlamms vor vertikalen Trennwänden 34, 35 angeordnet sind. Die Trennwände 34, 35 sind senkrecht zum Fluidisationssieb 16 angeordnet. Das Längenmaß der Trennwände 34, 35 beträgt mehr als die Hälfte des Breitenmaßes der Trockenkammer 17. Im Bereich der Austrittsöffnung 13 für den Schlamm aus der Trockenkammer 17 ist eine Schwelle 36 vorgesehen, deren Höhe einstellbar ist.

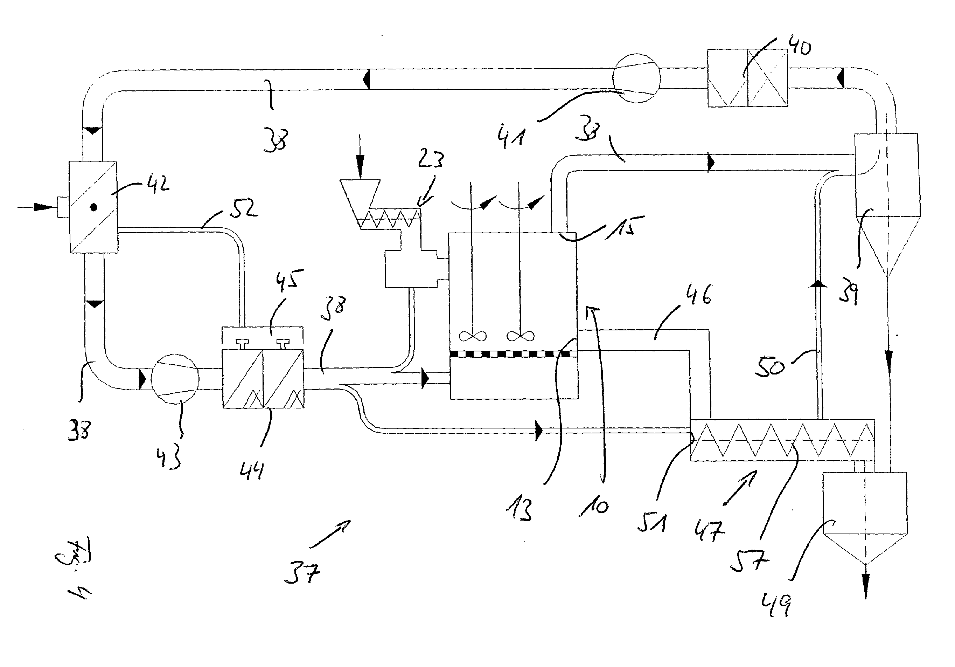

Der Fluidisationstrockner 10 ist wesentlicher Bestandteil der Vorrichtung 37 zum Trocknen von Schlamm gemäß Fig. 4. Unmittelbar an die Austrittsöfmung 15 für die Trockenluft aus der Trockenkammer ist ein Leitungssystem 38 angeordnet, das zur Rückführung der Trockenluft dient. Durch das Leitungssystem ist die Vorrichtung 37 als geschlossenes System ausgebildet. Ausgehend von dem Fluidisationstrockner 10 befinden sich in Flußrichtung der Trockenluft Mittel 39 zum Entstauben, Mittel 40 zum Entfeuchten, ein Ventilator 41 für Abluft, eine Jalousettenregelung 42, ein Ventilator 43 für Zuluft sowie ein Wärmelufterzeuger 44. Im Bereich des Wärmelufterzeugers 44 ist eine Brennkammer 45 vorgesehen.

Unmittelbar an die Austrittsöffnung 13 für den Schlamm aus der Trockenkammer 17 schließt sich eine Leitung 46 zur Verbindung der Trockenkammer 17 mit einer Vorrichtung 47 zum Nachtrocknen des Schlamms an. Innerhalb der Vorrichtung 47 ist eine Schnecke 48 oder dergleichen zum Transport des Schlamms durch die Vorrichtung 47 angeordnet. Die rotierend antreibbare Schnecke ist in ihrer Drehgeschwindigkeit variabel einstellbar. In Transportrichtung am Ende der Vorrichtung 47 ist eine Austrittsöffnung für den Schlamm angeordnet, der in einen Behälter 49 geleitet werden kann. Der Behälter 49 dient ebenfalls zur Aufnahme des aus der Trockenluft gefilterten Staubs durch das Mittel 39 zum Entstauben der Trockenluft. Die aus der Vorrichtung 47 abzuführende Trockenluft wird mittels einer Leitung 50 wiederum dem Leitungssystem 38 zugeführt. Eingangsseitig weist die Vorrichtung 47 eine Eintrittsöffnung 51 für Trockenluft auf. Die der Vorrichtung 47 zugeführte Trockenluft wird durch das Leitungssystem 38 an die Vorrichtung 47 geführt. Hierzu teilt sich das Leitungssystem 38 in Transportrichtung hinter dem Wärmelufterzeuger 44 auf. Ein Teil des Trockenluftstromes wird zur Vorrichtung 47 geleitet. Der Hauptteil der Trockenluft wird zur Luftkammer des Fluidisationstrockners 10 geleitet. Ein dritter Teil der Trockenluft wird der Dosiereinheit 23 zugeführt. Eine weitere Leitung 52 erstreckt sich von der Jalousettenregelung 42 zur Brennkammer 45 des Wärmelufterzeugers 44.

Das Mittel 39 zum Entstauben der aus der Trockenkammer 17 abgeführten Trockenluft enthält Entstaubungsmodule, mittels derer ein sehr hoher Entstaubungsgrad der Trockenluft ohne Reduzierung des Feuchtigkeitsgehaltes erreicht wird. Das Mittel 40 zum Entfeuchten der bereits vom Staub gereinigten Trockenluft enthält einen Wärmetauscher. Zum Abführen des Brüdenkondensats aus dem Wärmetauscher existiert ein nicht dargestellter Kondensatablaufstutzen. In der gezeigten Ausführungsform ist der Wärmelufterzeuger 44 als Membran-Wärmelufterzeuger ausgebildet.

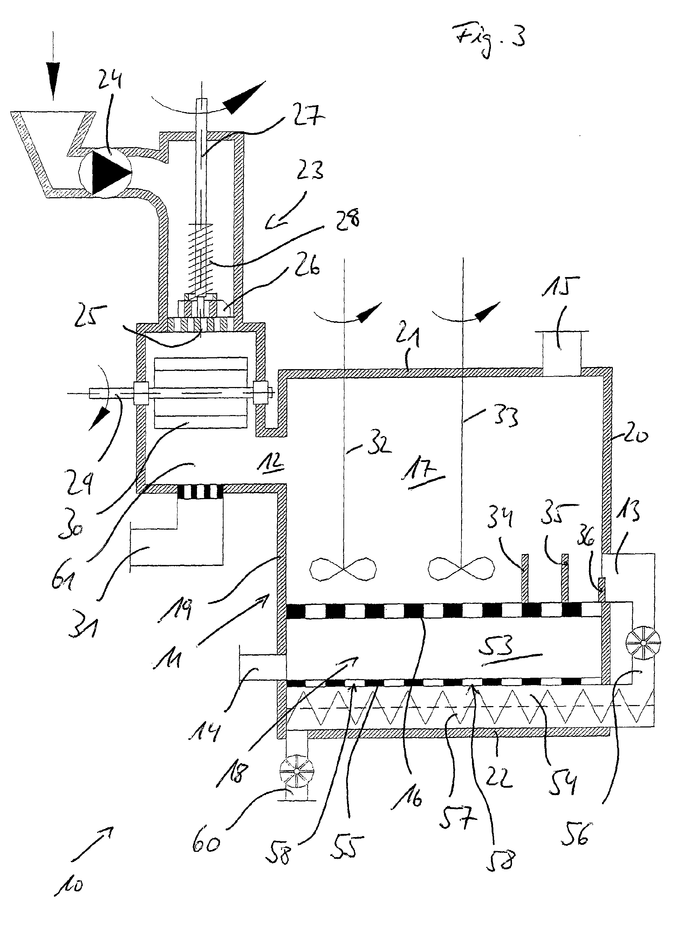

Die Ausführungsform des Fluidisationstrockners 10 gemäß Fig. 3 entspricht in wesentlichen Teilen der Ausführungsform gemäß Fig. 1, so daß für gleiche Teile die gleichen Bezugszeichen verwendet werden. Allerdings unterscheidet sich der Fluidisationstrockner 10 gemäß Fig. 3 gegenüber dem aus Fig. 1 darin, daß die Zuluftkammer 18 wiederum in eine obere Kammer 53 und eine untere Kammer 54 unterteilt ist. Die beiden Kammern 53 und 54 sind durch einen Siebboden 55 voneinander getrennt. Die Eintrittsöffnung 14 für die Trockenluft ist im Bereich der oberen Kammer 53 in der Seitenwand 19 ausgebildet. Innerhalb der unteren Kammer 54 ist ein Transportmittel für den aus der Trockenkammer 17 über ein Leitungssystem 56 in die untere Kammer geleiteten Schlamm vorgesehen. Das Transportmittel ist im gezeigten Ausführungsbeispiel als Schneckenförderer 57 ausgebildet. Der Schneckenförderer 57 ist drehbar und hinsichtlich der Rotationsgeschwindigkeit einstellbar. Der Siebboden 55 weist Öffnungen 58 auf, die in einem Bereich nahe der Eintrittsöffnung 14 (nicht dargestellte) Strömungsklappen aufweisen, die sich in Richtung der Eintrittsöffnung 14 öffnen und in einem in Flußrichtung hinteren Bereich der Trockenluft (nicht dargestellte) Bleche aufweisen, deren Öffnung von der Eintrittsöffnung 14 abgewandt sind.

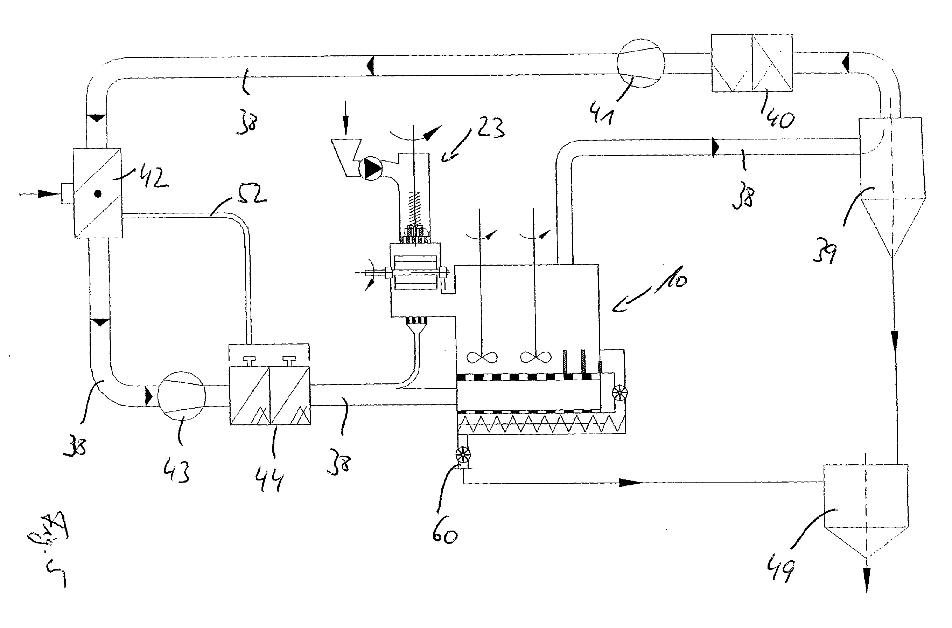

Der Fluidisationstrockner 10 gemäß der Fig. 3 ist wesentlicher Bestandteil der Vorrichtung 59 gemäß Fig. 5. Die Vorrichtung 59 gemäß Fig. 5 ist im wesentlichen identisch zur Vorrichtung 37 gemäß Fig. 4, allerdings mit dem Unterschied, daß der aus der Trokkenkammer geführte Schlamm über die Leitung 56 in die untere Kammer 53 der Zuluftkammer 18 geleitet wird. Der nachgetrocknete Schlamm wird dann über eine Leitung 60 in den Behälter 49 geleitet. Ein weiterer Unterschied besteht darin, daß das Leitungssystem 38 in Flußrichtung hinter dem Wärmelufterzeuger 44 lediglich zweigeteilt ist, nämlich mit einer Hauptleitung zur oberen Kammer 53 der Zuluftkammer 18 und einer weiteren Zuleitung zur Dosiereinheit 23.

Im folgenden wird das Verfahren gemäß der vorliegenden Erfindung im Detail beschrieben:

Der mechanisch bis zu einem Feuchtigkeitsgehalt von 65-90 % entwässerte Schlamm wird mit der Schneckenpumpe 24 zur Dosiereinheit 23, die auch als Fluidisierungs-Dosiereinrichtung bezeichnet wird, gefördert. Der Schlamm fällt auf das Formsieb 25 und wird durch das rotierende Drehmesser 26 gleichmäßig durch die Öffnungen des Formsiebes 25 gepreßt. Dabei wird das vorwiegend pastenförmige Material zu fadenartigen längeren elastischen Fragmenten umgeformt. Diese fadenartigen Fragmente werden auch als "Nudeln" bezeichnet. Durch die Rotation des Drehmessers 26 wird sichergestellt, daß der Bereich des Formsiebes 25 permanent gereinigt wird, so daß Verstopfungen, insbesondere durch faserige und feste Stoffe, vermieden werden. Die fadenartigen Fragmente des Schlamms gelangen im freien Fall in eine untere Kammer 61 der Dosiereinheit 23. Dieser unteren Kammer 61 wird über die Eintrittsöffnung 31 durch den Wärmeerzeuger 44 erwärmte Luft zugeführt, wobei die Luftströmung eine gleichmäßige flächige Trocknung, insbesondere der Oberfläche des geformten Schlamms bewirkt. Die Temperatur der Luft beträgt vorzugsweise 130 bis 150°C. Mit der Vortrocknung wird eine wiederholte Aggregation des geformten Schlamms verhindert. Mit anderen Worten wird die sogenannte Leimphase des Schlamms vermieden.

Die fadenartigen Schlammfragmente fallen auf die rotierenden Messer 30, wodurch die Zerkleinerung der Schlammfragmente erfolgt. Danach gelangt der geformte und zerkleinerte Schlamm durch die Eintrittsöffnung 12 in der Seitenwand 19 des Trockenraumes 11 in die Trockenkammer 17. Der geformte und zerkleinerte Schlamm fällt in Richtung des Fluidisationssiebes 16 und wird bei geringem Unterdruck getrocknet. Durch die Luftzufuhr von Trockenluft aus der Zuluftkammer 18 findet jedoch eine Verwirbelung des Schlamms statt. Man spricht in diesem Zusammenhang auch von Fluidisierung des Schlammes, da die Schlammfragmente sich quasi wie flüssiges Material verhalten und über dem Fluidisationssieb 16 schweben. Die zugeführte Trockenluft weist eine Temperatur von etwa 130-150° Celsius auf. Der aus der Zuluftkammer 18 in die Trockenkammer 17 strömende Luftstrom entspannt sich, während er nach oben strömt und weist eine Geschwindigkeit auf, die auf der Höhe des Fluidisationssiebes 16 zwei- bis viermal höher ist als die Geschwindigkeit des Hochschweben des Schlammes. Mittels des der Trockenkammer 17 zugeführten Luftstroms wird zum einen erreicht, daß Energie zugeführt wird, damit die für die Wasserverdampfung aus dem Schlamm notwendige Wärmeenergie vorhanden ist. Des weiteren dient der Luftstrom als Träger für kinetische Energie, womit die für die Fluidisierung des Schlammes notwendige Energie zugeführt wird. Letztlich dient der Luftstrom auch als Träger des verdampften Wassers, und zwar zum Austrag des Wasserdampfes aus der Trockenkammer 17 durch die Austrittsöffnung 15. Die Schlammtrocknung erfolgt durch Einwirkung der hohen Temperatur der Trokkenluft. Durch die intensive Vermischung und hohe Luftgeschwindigkeit werden der schnelle Energieaustausch und der Wasseraustritt begünstigt. Die Wirbelschicht verhält sich wie eine Siedeflüssigkeit, die zum Spiegelausgleich tendiert.

Um die Fluidisierung des bereits vorgetrockneten Schlammes im Eintrittsteil der Trokkenkammer 17 zu gewährleisten, dienen die Rührwerke 32, 33, die für eine permanente gleichmäßige Verwirbelung des Schlammes dienen. Innerhalb der Trockenkammer 17 wird der den Rührwerken 32, 33 und der Trockenluft aus der Zuluftkammer 18 ausgesetzte Schlamm mäanderförmig über die Oberfläche des Fluidisationssiebes 16 geführt. Hierzu dienen die Trennwände 34, 35, die den Weg, den der Schlamm in Richtung der Austrittsöffnung 13 zurücklegen muß, künstlich verlängern. Der zerkleinerte Schlamm wird selbsttätig in die Austragungsrichtung zur Austrittsöffnung 13 transportiert. Danach wird der Schlammüberschuß aus der Austrittsöffnung 13 ausgetragen, wobei der Schlamm eine Temperatur von etwa 60 bis 80°C aufweist. Beim Austrag des Schlamms aus der Trockenkammer 17 wird die variable Schwelle 36 verwendet, um die Höhe der Schlammschicht in der Trockenkammer 17 und damit die Aufenthaltszeit sowie den Trockengrad regulieren zu können. Üblicherweise wird die Höhe der Schlammschicht auf ein Niveau von etwa 30-150 mm über der Oberfläche des Fluidisationssiebes 16 eingestellt. Es sind jedoch auch andere Höhen vorstellbar, um die Aufenthaltszeit des Schlamms in der Trockenkammer 17 zu regulieren.

Bei dem Verfahren in der Anlage gemäß Fig. 4 wird der Schlamm nach dem Austrag aus der Trockenkammer 17 über die Leitung 46 der Vorrichtung 47 zum Nachtrocknen des Schlamms zugeführt. In der Vorrichtung 47 wird der Schlamm bei erhöhter Temperatur durch Trockenluft mit einer Temperatur von vorzugsweise etwa 130 bis 150 °C, die direkt aus dem Wärmelufterzeuger 44 zugefuhrt wird, zurückgehalten und getrocknet, um die Migration der restlichen Feuchtigkeit aus dem granulierten Schlamm zu ermöglichen. Um diese Migration zu erleichtern, weist die Vorrichtung 47 die Schnecke 48 auf, um die Schlammvermischung und die Luftströmung zwecks Schwadenentfernung zu ermöglichen. Der Vorteil des System besteht darin, daß durch die kontinuierliche Mischung die Feuchtigkeit mittels Teilchendiffusion und/oder Kapillarkräften hinaustransportiert wird. Die Aufenthaltszeit in der Vorrichtung 47 läßt sich durch die Rotationsgeschwindigkeit der Schnecke 48 beeinflussen. Eine Einstellung der Aufenthaltszeit ist auch insbesondere deswegen wünschenswert, um die Entfernung der osmotisch gebundenen und in pflanzlichen und tierischen Zellen bzw. in Kolloiden enthaltene Feuchtigkeit zu gewährleisten. Zum weiteren wird durch das Nachtrocknen auch erreicht, das durch chemische Bindungen oder Koordinationsbindungen verbundene Wasser aus dem Schlamm zu entfernen. Durch das mehrstufige Trocknen des Schlamms wird im Endergebnis Schlamm mit einem Feuchtigkeitsgehalt von etwa 1-15 % erzielt. Des weiteren ist durch die lange Verweildauer des Schlamms bei erhöhten Temperaturen das Endprodukt hygienisch. Der getrocknete Schlamm wird durch einen mittels Zellenschleuse abgedichteten Schlammaustrittsstutzen (nicht dargestellt) in den Behälter 49 transportiert. Die Trockenluftströmung aus der Vorrichtung 47 wird in das Leitungssystem 38 zurückgeführt.

Die aus der Trockenkammer 17 abgeführte Trockenluft, die eine Temperatur von etwa 60-90° Celsius aufweist, durch das Leitungssystem 38 dem Mittel 39 zur Entstaubung zugeführt und dort entstaubt, allerdings ohne der Abluft Feuchtigkeit zu entziehen. Die aus der Trockenkammer 17 entweichende Trockenluft ist mit Feuchtigkeit gesättigt und mit Staub und Aerosolen kontaminiert. Nach der Entstaubung der Trockenluft wird der abgetrennte Staub ausgetragen, und zwar in den Behälter 49. Die entstaubte aber noch feuchte Trockenluft wird über das Leitungssystem 38 dem Mittel 40 zum Entfeuchten zugeführt. In dem Mittel 40 wird die Lufttemperatur auf etwa 40-70° Celsius herabgekühlt und dadurch Dampfkondensation erreicht. Die Prozeßtemperaturen sind entsprechend angepaßt, um die erheblichen Änderungen des Dampfgehaltes in der Luft bei kleinen Änderungen der Temperatur zu garantieren. Daher ist die Kondensation von großen Wassermengen durch kleine Temperaturreduzierungen möglich. Das Brühenkondensat aus dem Wärmetauscher wird nach außen abgeführt. Die Brühen werden dabei um Mittel 40, das als Wärmetauscher oder auch Kühler ausgebildet ist, ohne direkten Kontakt zum Kühlmittel kondensiert. Die Kontaminierung des resultierenden Kondensates ist wegen der verwendeten Lösung und des effektiven Entstaubungssystems sehr niedrig.

Die entstaubte und entfeuchtete Trockenluft, die in Flußrichtung der Trockenluft hinter dem Mittel 40 zur Entfeuchtung eine Temperatur von etwa 40-70° Celsius aufweist, wird über das Leitungssystem 38 der Jalousettenregelung 42 zugeführt. Ein minimaler Anteil der gekühlten und entstaubten Trockenluft bis zu einer Menge von maximal 5 % wird zeitweise direkt in die Brennkammer 45 des Wärmelufterzeugers 44 geleitet und dort verbrannt. Dadurch wird die Unschädlichmachung von gasförmigen organischen Verunreinigungen gewährleistet. Der minimale Anteil der an die Brennkammer 45 abzugebenden Luft wird durch Frischluft ergänzt. Danach wird die Trockenluft durch die Ventilation mittels des Ventilators 43 dem Wärmelufterzeuger 44 zugeführt. Durch Verwendung des Ventilators 43 wird ein geringer Unterdruck aufgebaut, der die Sicherheit und Bedienungshygiene innerhalb des Fluidisationstrockners 10 gewährleistet. Der Wärmelufterzeuger wird die Trockenluft wieder auf die erforderliche Temperatur von etwa 130-150° Celsius erhöhen. Um das Schließen des Trockenluftkreislaufes zu ermöglichen, ist die Verwendung des Membran-Wärmelufterzeugers notwendig, um die Rauchgasströmung und Trockenluftströmung zu trennen.

Das Verfahren mit der Vorrichtung gemäß Fig. 5 verläuft in sehr ähnlicher Weise. Allerdings wird der Schlamm nach Austritt aus der Trockenkammer 17 direkt der unteren Kammer 54 der Zuluftkammer 18 zugeführt und dort einer Nachtrocknung unterzogen. Mittels der Schnecke wird der Schlamm durch die Vorrichtung 47 gefördert, wobei die Transportgeschwindigkeit über die Schnecke reguliert werden kann. Die Trockenluft zur Trocknung wird durch das Leitungssystem 38 der Zuluftkammer 18 zugeführt, wobei die Trockenluft durch den Siebboden 55 in die untere Kammer 54 gelangt. Der getrocknete Schlamm wird dem Behälter 49 über die Leitung 60 zugeführt. Die Abluft entweicht durch den Siebboden 55 über die Trockenkammer 17 in das Leitungssystem 38.

## Patentansprüche

1. Verfahren zur Trocknung von Schlamm, insbesondere von Abwasserschlamm, umfassend die Schritte:
a) mechanische Entwässerung des Schlamms bis zu einem Feuchtigkeitsgehalt von etwa 65 bis 90%,
b) Zuführen des Schlamms in einen Fluidisationstrockner (10),
c) Formen des Schlamms,
d) Trocknen mindestens der Oberfläche des geformten Schlamms im freien Fall in einem Gegenluftstrom aus Trockenluft,
e) weiteres Trocknen des Schlamms in einem Trockenraum (11) des Fluidisationstrockners (10) mittels Trockenluft, und
f) Abführen des bis zu einem Feuchtigkeitsgehalt von etwa 15bis 30% getrockneten Schlamms einerseits und der Trockenluft andererseits aus dem Trockenraum,
**gekennzeichnet dadurch , daß**
g) die Trockenluft in einem geschlossenen Kreislauf zirkuliert.

2. Verfahren nach Anspruch 1, **dadurch gekennzeichnet, daß** der aus einer Trockenkammer (17) des Trockenraums (11) abgeführte Schlamm einer Nachtrocknungsvorrichtung (47) zugeführt und darin durch Beaufschlagen mit Trockenluft aus dem geschlossenen Kreislauf bis zu einem Feuchtigkeitsgehalt von etwa 1 bis 15% getrocknet wird.

3. Verfahren nach Anspruch 1 oder 2, **dadurch gekennzeichnet, daß** die aus dem Trockenraum (11) und /oder der Nachtrocknungsvorrichtung (47) abgeführte Trockenluft entstaubt, entfeuchtet und anschließend nach einer Erwärmung wieder dem Trockenraum und/oder der Nachtrocknungsvorrichtung (47) zugeführt wird.

4. Verfahren nach einem der Ansprüche 1 bis 3, **dadurch gekennzeichnet, daß** der mindestens oberflächlich getrocknete Schlamm vor dem Eintritt in die Trockenkammer (17) zerkleinert wird.

5. Verfahren nach einem der Ansprüche 1 bis 4, **dadurch gekennzeichnet, daß** der Schlamm während der Trocknung in der Trockenkammer (17) verwirbelt wird.

6. Verfahren nach einem der Ansprüche 1 bis 5, **dadurch gekennzeichnet, daß** die Geschwindigkeit der Trockenluft auf der Höhe eines Siebbodens (16) innerhalb des Trockenraumes (11) etwa 2 bis 4mal größer ist als die Schwebegeschwindigkeit des Schlamms.

7. Verfahren nach einem der Ansprüche 1 bis 6, **dadurch gekennzeichnet, daß** die Aufenthaltszeit des Schlamms in dem Trockenraum (11) und /oder der Nachtrocknungsvorrichtung (47) reguliert wird.

8. Vorrichtung zum Trocknen von Schlamm, insbesondere Abwasserschlamm, im wesentlichen bestehend aus einem Fluidisationstrockner (10) umfassend einen Trockenraum (11) mit einer Eintrittsöffnung (12) und einer Austrittsöffnung (13) für den Schlamm, einer Eintrittsöffnung (14) und einer Austrittsöffnung (15) für Trockenluft, einen horizontal verlaufenden Siebboden (16), der den Trockenraum (11) in eine Trockenkammer (17) und eine Zuluftkammer (18) teilt, sowie einen Schlammaufgeber mit einem Siebboden und einer Eintrittsöffnung (31) für Trockenluft, **dadurch gekennzeichnet, daß** die Vorrichtung als geschlossenes System ausgebildet ist, derart, daß die aus der Trockenkammer (17) abgeführte Trockenluft dem Trockenraum (11) wieder zugeführt wird.

9. Vorrichtung nach Anspruch 8, **dadurch gekennzeichnet, daß** dem Fluidisationstrockner (10) eine Vorrichtung (47) zum Nachtrocknen des Schlamms nachgeordnet ist.

10. Vorrichtung nach Anspruch 9, **dadurch gekennzeichnet, daß** die Vorrichtung (47) zum Nachtrocknen integraler Bestandteil des Fluidisationstrockners (10) ist.

11. Vorrichtung nach Anspruch 9 oder 10, **dadurch gekennzeichnet, daß** die Vorrichtung (47) zum Nachtrocknen innerhalb der Zuluftkammer (18) angeordnet ist.

12. Vorrichtung nach einem der Ansprüche 8 bis 11, **dadurch gekennzeichnet, daß** der Schlammaufgeber als Dosiereinheit (23) ausgebildet ist und aus einem Gehäuse mit einer Pumpe (24), einem Formsieb (25) als Siebboden und einem Drehmesser (26), das an das Formsieb (25) drückbar ist, besteht.

13. Vorrichtung nach Anspruch 12, **dadurch gekennzeichnet, daß** in Flußrichtung des Schlamms hinter dem Formsieb (25) zusätzliche Mittel zum Zerkleinern des Schlamms angeordnet sind.

14. Vorrichtung nach einem der Ansprüche 8 bis 13, **dadurch gekennzeichnet, daß** innerhalb der Trockenkammer (17) mindestens ein Rührwerk (32, 33) angeordnet ist.

15. Vorrichtung nach einem der Ansprüche 8 bis 14, **dadurch gekennzeichnet, daß** innerhalb der Trockenkammer (17) mindestens eine Trennwand (34, 35) angeordnet ist, die senkrecht zum Siebboden (16) ausgerichtet ist und deren Längenmaß mehr als die Hälfte des Breitenmaßes der Trockenkammer (17) beträgt.

16. Vorrichtung nach einem der Ansprüche 8 bis 15, **dadurch gekennzeichnet, daß** im Bereich der Austrittsöffnung (13) für den Schlamm aus der Trockenkammer (17) eine einstellbare Schwelle (36) vorgesehen ist.

17. Vorrichtung nach einem der Ansprüche 8 bis 16, **dadurch gekennzeichnet, daß** zum Schließen des Systems ein Leitungssystem (38) vorgesehen ist, in dessen Verlauf in Transportrichtung der Trockenluft hinter dem Fluidisationstrockner (10) Mittel (39) zum Entstauben, Mittel (40) zum Entfeuchten, Ventilatoren (41, 43) für Zu- und Abluft, eine Jalousetten-Regelung (42) sowie ein Wärmelufterzeuger (44) angeordnet sind.

18. Vorrichtung nach Anspruch 17, **dadurch gekennzeichnet, daß** im Bereich des Wärmelufterzeugers (44) eine Brennkammer (45) vorgesehen ist.

19. Vorrichtung nach einem der Ansprüche 9 bis 18, **dadurch gekennzeichnet, daß** die Vorrichtung (47) zum Nachtrocknen integraler Bestandteil des geschlossenen Systems ist.
